(19) Europäisches Patentamt / European Patent Office / Office européen des brevets

(11) **EP 2 733 530 B1**

(12) **FASCICULE DE BREVET EUROPEEN**

(45) Date de publication et mention de la délivrance du brevet:
**15.03.2017 Bulletin 2017/11**

(51) Int Cl.:
*H01S 3/00* *(2006.01)*     *G02B 6/293* *(2006.01)*
*G02B 5/18* *(2006.01)*     *G02B 27/00* *(2006.01)*

(21) Numéro de dépôt: **13306539.1**

(22) Date de dépôt: **12.11.2013**

(54) **Dispositif pour la compensation de dispersion temporelle appliqué à la génération d'impulsions lumineuses ultra brèves**

Vorrichtung zur vorübergehenden Dispersionskompensierung, die bei der Erzeugung von ultrakurzen Lichtimpulsen eingesetzt wird

Device for compensating time dispersion applied to the generation of ultra-short light pulses

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2012 FR 1260980**

(43) Date de publication de la demande:
**21.05.2014 Bulletin 2014/21**

(73) Titulaire: **Fastlite**
**06560 Valbonne (FR)**

(72) Inventeurs:
• **Tournois, Pierre**
  **06800 CAGNES S/MER (FR)**
• **Forget, Nicolas**
  **91400 ORSAY (FR)**

(74) Mandataire: **Mazabraud, Xavier**
**Cabinet Moutard**
**35, rue de la Paroisse**
**78000 Versailles (FR)**

(56) Documents cités:
**FR-A1- 2 953 945     US-A1- 2007 014 317**

• **KANE S ET AL: "HYBRID GRATING-PRISM STRETCHER-COMPRESSOR SYSTEM WITH CUBIC PHASE AND WAVELENGTH TUNABILITY AND DECREASED ALIGNMENT SENSITIVITY", OPTICS LETTERS, THE OPTICAL SOCIETY, vol. 19, no. 22, 15 novembre 1994 (1994-11-15), pages 1876-1878, XP000475139, ISSN: 0146-9592**
• **ZAOUTER Y ET AL: "Third-order spectral phase compensation in parabolic pulse compression", OPTICS EXPRESS, OSA (OPTICAL SOCIETY OF AMERICA), WASHINGTON DC, (US), vol. 15, no. 15, 23 juillet 2007 (2007-07-23), pages 9372-9377, XP002601937, ISSN: 1094-4087**
• **KANE S ET AL: "Fourth-order-dispersion limitations of aberration-free chirped-pulse amplification systems", JOURNAL OF THE OPTICAL SOCIETY OF AMERICA B (OPTICAL PHYSICS) OPT. SOC. AMERICA USA, vol. 14, no. 5, mai 1997 (1997-05), pages 1237-1244, XP002712968, ISSN: 0740-3224**

**Description**

La présente invention concerne un dispositif pour la compensation de dispersion temporelle appliqué à la génération d'impulsions ultra brèves.

Ce dispositif s'applique notamment aux systèmes de génération d'impulsions lumineuses ultra brèves nécessitant la compensation de la dispersion temporelle des fréquences optiques introduite par les divers composants de la chaîne de génération.

D'une façon générale, on sait que les systèmes de génération d'impulsions lumineuses ultra brèves de durées inférieures ou égales à 10 femto-secondes doivent transmettre des bandes de fréquences optiques de l'ordre de 100 THz, soit exprimées en longueurs d'ondes optiques, de l'ordre de 200 nm autour de la longueur d'onde centrale de 800 nm. La difficulté la plus importante rencontrée dans de tels systèmes est la compensation de la dispersion temporelle des fréquences optiques introduite par les composants et systèmes optiques.

La dispersion dans les systèmes optiques s'exprime par la variation de la phase optique $\varphi$ en fonction de la pulsation optique : $\omega = 2\pi v$, au moyen du développement de Taylor suivant :

$$\varphi(\omega) = \varphi_0 + \varphi_1(\omega - \omega_0) + \varphi_2(\omega - \omega_0)^2/2 + \varphi_3(\omega - \omega_0)^3/6 + \varphi_4(\omega - \omega_0)^4/24 + \varphi_5(\omega - \omega_0)^5/5! + ...$$

$v$ étant la fréquence optique prise autour d'une fréquence centrale $v_0$ de pulsation $\omega_0$.

Le temps de retard de groupe est alors donné par :

$$t_g(\omega) = t_0 + \varphi_2(\omega - \omega_0) + \varphi_3(\omega - \omega_0)^2/2 + \varphi_4(\omega - \omega_0)^3/6 + \varphi_5(\omega - \omega_0)^4/24 + ...$$

Les dispersions du 1$^{ier}$ ordre (terme en $\varphi_2$) et du 2$^{ième}$ ordre (terme en $\varphi_3$) de la variation du temps de retard de groupe avec la fréquence optique, introduites par les éléments de la chaine d'amplification laser, peuvent être compensées par une paire de "GRISMS" (contraction de "grating" et de "prism") tel que celle présentée dans le Brevet n° 09 58840 déposé en France le 10 décembre 2009, et objet de la publication de N.Forget, V.Crozatier et P.Tournois dans Applied Physics B (2012, vol.109, pp.121-125) : « Transmission Bragg-grating Grisms for Pulse Compression ».

Dans la description du susdit brevet et de celle de la susdite publication, les faces des réseaux et les faces extérieures des prismes sont parallèles et cela ne permet pas de compenser la dispersion du 3$^{ième}$ ordre (terme en $\varphi_4$) de la variation du temps de retard avec la fréquence optique.

Dans ces systèmes, afin de contourner les limitations de puissance optique instantanée dans les amplificateurs, l'impulsion lumineuse est d'abord étendue temporellement par un dispositif à dispersion du second ordre en phase $\varphi_2$ de signe donné, appelé extenseur, puis amplifiée et finalement re-comprimée par un dispositif à dispersion du second ordre en phase $\varphi_2$ de signe opposé, appelé compresseur, souvent réalisé par une combinaison de deux réseaux parallèles telle que celle décrite par E.B. Treacy dans IEEE J. on Quantum Electron. (5, 9, pp.454-458, Sept. 1969) : "Optical Pulse Compression with Diffraction Gratings".

Cependant, un tel dispositif compresseur introduit, en général, une dispersion du 2$^{ième}$ ordre (terme en $\varphi_3$) positive, qui dans le système de Treacy se rajoute à la dispersion des matériaux. Ces dispositifs ne sont donc adéquats que lorsque la bande spectrale est suffisamment faible pour que l'effet des termes du 2$^{ième}$ ordre (terme en $\varphi_3$) et des ordres supérieurs (terme en $\varphi_4$, $\varphi_5$) puisse être considéré comme négligeable.

C'est la raison pour laquelle les dispositifs, appelés "GRISMS", qui sont des dispositifs hybrides intégrant deux prismes identiques, montés tête-bêche, placés à l'intérieur de deux réseaux parallèles et fonctionnant soit en réflexion comme ceux décrits dans les publications : "Efficient reflection grisms for pulse compression and dispersion compensation of femtosecond pulses" (Optics Letters, Nov.2006, pp.3363-3365), "Dispersion management for sub-10fs, 10TW optical parametric chirped-pulse amplifier" (Optics Letters, August 2007, pp.2227-2229), "Design considerations for a compact grism stretcher for non-collinear optical parametric chirped-pulse amplification" Appl.Phys.B, 2009, pp.445-452), soit en transmission comme ceux du Brevet n° 09 58840 précité, dont les faces externes des prismes sont parallèles aux faces des réseaux et qui permettent d'obtenir une dispersion du 1$^{ier}$ ordre (terme en $\varphi_2$) sans dispersion du 2$^{ième}$ ordre (terme en $\varphi_3$), ou avec une dispersion du 2$^{ième}$ ordre ajustable en signe pour compenser les dispersions de systèmes optiques sont utilisés. Mais aucun de ces dispositifs, dont toutes les faces externes sont parallèles, ne permet de compenser la dispersion du 3$^{ième}$ ordre (terme en $\varphi_4$).

Le but de l'invention est de proposer un dispositif permettant de compenser les dispersions temporelles du troisième ordre.

L'invention a pour objet un dispositif pour la compensation de dispersion temporelle appliqué à la génération d'impulsions ultra brèves, comprenant :

- deux réseaux de diffraction optiques transparents, identiques et parallèles entre eux, fonctionnant sur le principe de la diffraction de Bragg, et,
- deux prismes identiques, placés tête-bêche, dans l'espace séparant les susdits réseaux de diffraction optiques,

sachant que les faces extérieures des susdits prismes sont parallèles entre elles et font un angle non nul avec les faces des susdits réseaux de diffraction optiques.

Un paramètre supplémentaire, définissant le susdit angle non nul, appelé $\gamma$, permet de compenser la dispersion du 3<sup>ième</sup> ordre (terme en $\varphi_4$) de la variation du temps de retard avec la fréquence optique, en plus de celles des 1<sup>ier</sup> et 2<sup>ième</sup> ordres.

Avantageusement, le dispositif selon l'invention pourra être appliqué à la réalisation d'amplificateurs d'impulsions ultra brèves utilisant le principe de l'extension et de la re-compression.

Une autre application envisagée du dispositif proposé concerne les filtres programmables à base de diffraction acousto-optique. Ces filtres sont réalisés dans un matériau, tel que la Paratellurite, dont la dispersion propre se rajoute à la dispersion programmée produite par l'interaction acousto-optique. L'adjonction d'un dispositif selon l'invention permet de compenser totalement ou partiellement cette dispersion propre, ce qui permet d'étendre l'utilisation des filtres à des largeurs de bande supérieures.

Un mode de mise en oeuvre d'un dispositif selon l'invention est décrit ci-après, à titre d'exemple non limitatif, avec référence aux dessins annexés dans lesquels :

La figure 1 est une représentation schématique de la structure d'un dispositif selon l'invention ;

La figure 2 est une représentation schématique de résultats de dispersion obtenus grâce au dispositif de la figure 1 ;

La figure 3 montre le tracé des rayons optiques à l'intérieur du dispositif de la figure 1 ;

La figure 4 montre le tracé des rayons extrêmes dans le dispositif de la figure 1 ;

La figure 5 montre le résidu de 4<sup>ième</sup> ordre du temps de retard non corrigé selon un premier mode de réalisation pour l'invention ; et

La figure 6 montre le résidu de 4<sup>ième</sup> ordre du temps de retard non corrigé selon un deuxième mode de réalisation.

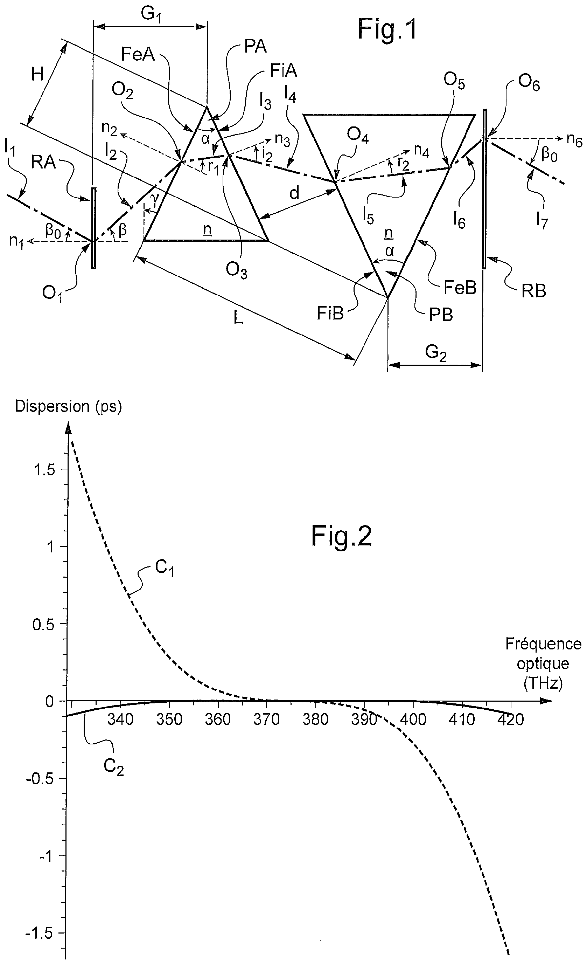

Dans l'exemple représenté sur la figure 1, la représentation schématique d'un premier mode de réalisation d'une structure d'un dispositif selon l'invention pour la compensation de la dispersion temporelle appliqué à la génération d'impulsions lumineuses ultra brèves, comprend deux réseaux de Bragg, RA, RB, identiques et parallèles entre eux, comprenant un nombre de traits $\sigma$ par mm, entre lesquels ont été placés, en géométrie dite tête-bêche, deux prismes identiques PA, PB, d'indice n, d'angle au sommet $\alpha$, dont les faces extérieures, respectivement FeA et FeB, sont parallèles entre elles, distantes d'une longueur L et font un angle $\gamma$ avec les faces parallèles des réseaux RA et RB. La distance entre les sommets des prismes PA, PB, mesurée parallèlement aux faces FeA et FeB est H et la distance entre les deux faces internes FiA et FiB, des prismes est d.

Un premier faisceau optique incident $I_1$ est représenté à la figure 1 ; ce faisceau $I_1$ pénètre dans le réseau RA en un point $O_1$ sous l'incidence de Bragg $\beta_0$ par rapport à la normale $n_1$ au réseau RA, donnée par :

$$\sin \beta_0 = -\sigma c / 2 \nu_0$$

c étant la vitesse de la lumière dans le vide et $\nu_0$ la fréquence optique centrale de la bande choisie.

L'indice optique n des prismes PA, PB est choisi de telle manière que l'ordre 0, non diffracté, soit totalement réfléchi par la face interne FiA d'un premier prisme PA.

L'ordre 1 est diffracté dans l'air vers le sommet du premier prisme PA, représenté par un deuxième faisceau optique $I_2$, sous un angle $\beta$ positif tel que :

$$\sin \beta = \sigma c \left( \frac{1}{\nu} - \frac{1}{2 \nu_0} \right)$$

lequel est réfracté dans le verre, selon un troisième faisceau $I_3$, par la face extérieure FeA du premier prisme PA en un

point $O_2$, sous un angle $r_1$ , tel que :

$$\sin r_1 = \sin(\beta + \gamma) / n$$

l'angle $(\beta + \gamma)$ étant l'angle que fait le faisceau diffracté $I_2$ avec la normale $n_2$ à la face inclinée FeA.

Le troisième faisceau $I_3$ est ensuite réfracté dans l'air selon un quatrième faisceau $I_4$ par la face interne FiA du premier prisme PA sous un angle $i_2$, tel que :

$$\sin i_2 = n \sin(r_1 - \alpha)$$

l'angle $(r_1 - \alpha)$ étant l'angle que fait le faisceau $I_3$ avec la normale $n_3$ à la face interne FiA du prisme PA.

La distance d entre les deux faces internes FiA, FiB, respectivement des prismes PA, PB, est :

$$d = (L \cos\alpha - H \sin\alpha)$$

Le quatrième faisceau $I_4$ parcourt dans l'air une distance $d/\cos i_2$, pour aboutir au point $O_4$ sur la face interne FiB du deuxième prisme PB, puis est réfracté dans le verre par le prisme PB, selon un cinquième faisceau $I_5$, sous l'angle $r_2 = (r_1 - \alpha)$, pour aboutir en un point $O_5$ sur la face externe FeB du second prisme PB. Le cinquième faisceau $I_5$ est alors réfracté dans l'air selon un sixième faisceau $I_6$ par la face extérieure FeB du deuxième prisme PB sous l'angle $(\beta + \gamma)$ pour aboutir au point $O_6$ sur le deuxième réseau RB sous l'angle $\beta$, et être diffracté selon un septième faisceau $I_7$, parallèlement au faisceau incident $I_1$, sous l'angle $\beta_0$ par rapport à la normale $n_6$ au réseau RB.

L'indice optique de groupe des prismes étant N, le temps de retard de groupe $t_g$ introduit par le dispositif entre un plan d'onde d'entrée passant par le sommet du premier prisme PA et un plan d'onde de sortie passant par le sommet du second prisme PB est donné par :

$$ct_g = \frac{d}{\cos i_2} + \frac{1}{\cos r_1}\left[L - \frac{d\cos(\alpha + i_2)}{\cos i_2}\right]\left[N - \frac{\cos r_2(\sin\gamma + \sin\beta_0 \cos(\beta + \gamma))}{\sin\alpha\sin\beta}\right] + (G_1 + G_2)\frac{(1 - \cos(\beta - \beta_0))}{\cos\beta}$$

$G_1$ et $G_2$ étant respectivement les distances du sommet du premier prisme PA au premier réseau RA et du sommet du deuxième prisme PB au deuxième réseau RB.

Dans l'exemple représenté sur la figure 2, les courbes C1, C2 illustrent l'intérêt de l'inclinaison des prismes à l'intérieur des réseaux de diffraction de Bragg dans l'exemple de la compensation par le dispositif de la dispersion d'une fibre de silice de 75 cm de longueur dans une bande de 200 nm autour de 800 nm, c'est à dire de 330 à 420 THz.

La courbe C1 montre la dispersion non corrigée du 3ième ordre qui est résiduelle, après correction des 1ier et 2ième ordres par un dispositif selon le Brevet n° 09 58840 suscité dans lequel les prismes ne sont pas inclinés à l'intérieur des réseaux.

La courbe C2 montre la dispersion non corrigée du 4ième ordre qui est résiduelle, après correction des 1ier, 2ième et 3ième ordres par le dispositif selon l'invention.

La dispersion résiduelle est 30 fois plus faible dans le cas des prismes inclinés (de 3 pico secondes à 100 femto secondes).

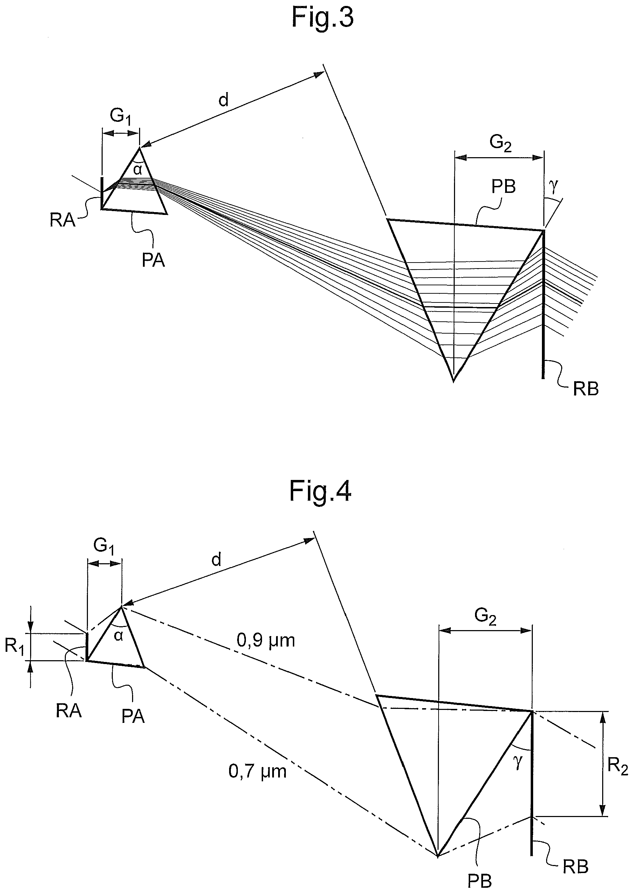

Dans l'exemple représenté sur la figure 3, les rayons optiques sont indiqués à l'intérieur du dispositif selon l'invention pour un rayon d'incidence donnée sur le premier réseau optique et dans une bande passante de 200 nm de part et d'autre de 800 nm.

Dans l'exemple représenté sur la figure 4, les rayons optiques extrêmes sont indiqués à l'intérieur du dispositif selon l'invention pour une bande passante de 200 nm de part et d'autre de 800 nm.

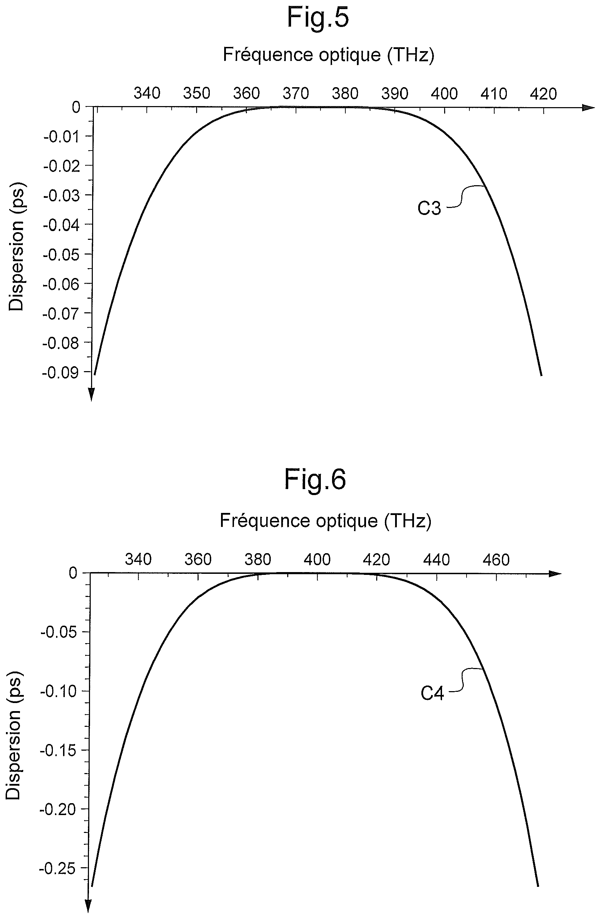

On va maintenant décrire un premier mode de réalisation de l'invention, dont la dispersion est illustrée par la figure 5.

A titre de premier exemple de dispositif de compensation de la dispersion temporelle selon l'invention, il s'agit de compenser la dispersion temporelle de 95 ps introduite par un étireur à fibre de silice dont la longueur du trajet optique est $L_0$= 75 cm dans une bande de 200 nm de part et d'autre de $\lambda_0$ = 0,8 $\mu$m, c'est à dire de 90 THz de part et d'autre de $\nu_0$= 375 THz, par une paire de "GRIMS" inclinés utilisée en aller et retour et constituée de deux réseaux de $\sigma$ = 1250 traits/mm et de deux prismes de verre SF 57 dont l'indice de groupe est $N_0$.

L'expansion de Taylor du temps de retard introduit par cet étireur : $t_R = N_0 L_0 \ / \ c$ en fonction de la fréquence optique $\nu$ autour de $\nu_0$, s'écrit :

$$t_R = 4691.3 + 1.052(\nu - 375) + 2.088.10^{-3}(\nu - 375)^2 + 1.557.10^{-6}(\nu - 375)^3 + 3.828.10^{-9}(\nu - 375)^4 + + +$$

L'expansion de Taylor du temps de retard $t_g$ introduit par la paire de "GRIMS" Inclinés s'écrit :

$$t_g = t_0 + C_2(\nu - 375) + C_3(\nu - 375)^2 + C_4(\nu - 375)^3 + C_5(\nu - 375)^4 + + +$$

$C_2$, $C_3$, $C_4$ et $C_5$ étant les coefficients de Taylor d'ordres 1, 2, 3 et 4 du temps de retard $t_g$.

Pour compenser, jusqu'au 4$^{\text{ième}}$ ordre, la dispersion temporelle de 95 ps de l'étireur, par la paire de "GRIMS" inclinés utilisée en aller et retour, il faut résoudre le système d'équations :

$$C_2 + (1.052)/2 = 0, \ C_3 + (2.088.10^{-3})/2 = 0 \ \text{et} \ C_4 + (1.557.10^{-6})/2 = 0$$

Pour un diamètre $D_1 = 4$ mm du faisceau incident sur le réseau RA, la solution de ce système d'équations est :

$\alpha = 54.978°$, $\gamma = 38.815°$, L = 85.36 mm, H = 8.54 mm et d = 42 mm avec : $R_1 = 4.69$ mm, $R_2 = 19.40$ mm, $G_1 = 11.23$ mm et $G_2 = 23.78$ mm

$R_1$ et $R_2$ représentant la longueur des réseaux RA et RB.

Le résidu de 4$^{\text{ième}}$ ordre du temps de retard (terme en $\varphi_5$) non corrigé est représenté sur la figure 5 selon la courbe C3.

Ce résidu est 30 fois plus faible que le résidu du 3$^{\text{ième}}$ ordre non corrigé par les "GRIMS" droits selon la description du Brevet n° 09 58840 précité.

On va maintenant décrire un deuxième mode de réalisation de l'invention, dont la dispersion est illustrée par la figure 6.

A titre de deuxième exemple de dispositif de compensation de la dispersion temporelle à très large bande, selon l'invention, il s'agit de compenser la dispersion temporelle d'un cristal de TeO$_2$ dont l'indice de groupe est N$_1$ et la longueur L$_1$ = 45 mm, qui constitue la tête acousto-optique d'un filtre AOPDF (Acousto-Optique Programmable Dispersive Filter), dans une bande de 300 nm autour de la fréquence optique $\nu_0$ de 400 THz ($\lambda_0 = 0{,}75$ µm), c'est à dire de 325 à 475 THz, par une paire de GRISMS inclinés utilisée en aller simple et constituée de deux réseaux de $\sigma = 966$ traits/mm et de deux prismes de verre SF 57.

L'expansion de Taylor du temps de retard introduit par le cristal de TeO$_2$ : $t_R = N_1 L_1 \ / \ c$ en fonction de la fréquence optique $\nu$ autour de $\nu_0$, s'écrit :

$$t_R = 353.6 + 1.550.10^{-1}(\nu - 400) + 3.183.10^{-4}(\nu - 400)^2 + 4.050.10^{-7}(\nu - 400)^3 + 6.964.10^{-10}(\nu - 400)^4 + + +$$

Si l'on pré-programme dans le filtre AOPDF une variation linéaire de fréquence $\nu$ de 15000 fs$^2$ autour de 400 THz, c'est à dire : $9.425.10^{-2}(\nu - 400)$, l'expansion de Taylor du temps de retard introduit par le filtre AOPDF devient :

$$t_R = 353.6 + 2.492.10^{-1}(\nu - 400) + 3.183.10^{-4}(\nu - 400)^2 + 4.050.10^{-7}(\nu - 400)^3 + 6.964.10^{-10}(\nu - 400)^4 + + +$$

Pour compenser, jusqu'au 4$^{\text{ième}}$ ordre, la dispersion temporelle du filtre AOPDF, par la paire de "GRIMS" inclinés utilisée en aller simple, il faut résoudre le système d'équations :

$$C_2 + 2.492.10^{-1} = 0, \ C_3 + 3.183.10^{-4} = 0 \ \text{et} \ C_4 + 4.050.10^{-7} = 0$$

Pour un diamètre $D_1 = 3$ mm du faisceau incident sur le réseau RA, la solution de ce système d'équations est :

$\alpha = 54.261°$, $\gamma = 43.804°$, L = 77.23 mm, H = 8.50 mm et d = 38.21 mm avec : $R_1 = 3.35$ mm, $R_2 = 19.16$ mm, $G_1 =$

7.76 mm et $G_2$ = 24.35 mm

$R_1$ et $R_2$ représentant la longueur des réseaux RA et RB.

Le résidu de 4<sup>ième</sup> ordre non corrigé du temps de retard (terme en $\varphi_5$) est représenté sur la figure 6 selon la courbe C4.

A titre de troisième exemple de dispositif de compensation de la dispersion temporelle, il s'agit d'associer un premier dispositif selon l'invention, et un deuxième dispositif selon l'invention, le deuxième dispositif étant orienté à 180° par rapport au premier dispositif, permettant de doubler les effets de dispersion et de retrouver la géométrie initiale du faisceau optique.

**Revendications**

1. Dispositif pour la compensation de dispersion temporelle appliqué à la génération d'impulsions ultra brèves de fréquence optique ($\nu$), comprenant :

   - deux réseaux de diffraction optiques (RA, RB), transparents, identiques et parallèles entre eux, fonctionnant sur le principe de la diffraction de Bragg, et,
   - deux prismes (PA, PB) identiques, placés tête-bêche, dans l'espace séparant les dits réseaux de diffraction optiques (RA, RB),

   **caractérisé en ce que** les faces extérieures (FeA, FeB) des susdits prismes (PA, PB) sont parallèles entre elles et font un angle non nul ($\gamma$) avec les faces parallèles des susdits réseaux de diffraction optiques (RA, RB).

2. Dispositif selon la revendication 1,
   **caractérisé en ce qu'**il introduit un temps de retard de groupe ($t_g$) dont la variation en fonction de la fréquence optique ($\nu$) , compense la variation d'un temps de retard de groupe ($t_R$) introduit par l'un ou l'ensemble des éléments d'une chaine optique jusqu'au 4<sup>ième</sup> ordre du développement de Taylor dudit temps de retard ($t_R$).

3. Dispositif pour la compensation de dispersion temporelle,
   **caractérisé en ce qu'**il comprend un premier dispositif selon la revendication 2 et un deuxième dispositif selon la revendication 2, le deuxième dispositif étant orienté à 180° par rapport au premier dispositif.

4. Procédé de compression des impulsions laser préalablement étirées par un dispositif optique dispersif,
   **caractérisé en ce qu'**il utilise un dispositif selon l'une des revendications 1 à 3.

5. Procédé de compensation de la dispersion temporelle d'un filtre acousto-optique, programmable ou non,
   **caractérisé en ce qu'**il utilise un dispositif selon l'une des revendications 1 à 3.

**Patentansprüche**

1. Vorrichtung zur vorübergehenden Dispersionskompensierung, die bei der Erzeugung von ultrakurzen Impulsen einer optischen Frequenz ($\nu$) eingesetzt wird, umfassend:

   - zwei transparente, identische und zueinander parallele optische Gitter (RA, RB), die nach dem Prinzip der Bragg-Beugung arbeiten, und
   - zwei identische Prismen (PA, PB), die in dem Raum, der die optischen Gitter (RA, RB) trennt, einander entgegengesetzt angeordnet sind,

   **dadurch gekennzeichnet, dass** die Außenflächen (FeA, FeB) der vorgenannten Prismen (PA, PB) zueinander parallel sind und mit den parallelen Flächen der vorgenannten optischen Gitter (RA, RB) einen Nichtnullwinkel ($\gamma$) bilden.

2. Vorrichtung nach Anspruch 1,
   **dadurch gekennzeichnet, dass** sie eine Gruppenverzögerungszeit ($t_g$) einführt, deren Variation in Abhängigkeit von der optischen Frequenz ($\nu$) die Variation einer Gruppenverzögerungszeit ($t_R$) kompensiert, die durch eines oder alle Elemente einer optischen Kette bis zur 4ten Ordnung der Taylorentwicklung der Verzögerungszeit eingeführt wird.

**3.** Vorrichtung zur vorübergehenden Dispersionskompensation,
**dadurch gekennzeichnet, dass** diese eine erste Vorrichtung gemäß Anspruch 2 und eine zweite Vorrichtung gemäß Anspruch 2 umfasst, wobei die zweite Vorrichtung in einem Winkel von 180° zu der ersten Vorrichtung angeordnet ist.

**4.** Verfahren zur Kompression von Laserimpulsen, die vorher durch eine dispersive optische Vorrichtung gestreckt wurden,
**dadurch gekennzeichnet, dass** eine Vorrichtung gemäß einem der Ansprüche 1 bis 3 verwendet wird.

**5.** Verfahren zur Kompensation der vorübergehenden Dispersion eines akustooptischen, programmierbaren oder nichtprogrammierbaren Filters,
**dadurch gekennzeichnet, dass** eine Vorrichtung gemäß einem der Ansprüche 1 bis 3 verwendet wird.

**Claims**

**1.** Device for compensating time dispersions applied to the generation of ultra-short pulses with optic frequency ($\nu$), comprising:

- two transparent optical diffraction gratings (RA, RB), which are identical and parallel to each other, operating on the principle of the Bragg diffraction, and
- two identical prisms (PA, PB), placed head to tail, in the space separating said aforementioned optical diffraction gratings (RA, RB),

**characterized in that** the outer faces (FeA, FeB) of said prisms (PA, PB) are parallel to each other and form a non-zero angle ($\gamma$) with the parallel faces of said optical diffraction gratings (RA, RB).

**2.** Device according to claim 1,
**characterized in that** it introduces a group delay time ($t_g$) whereof the variation as a function of the optical frequency ($\nu$) compensates the variation of a group delay time ($t_R$) introduced by one or the group of the elements of an optical channel up to the $4^{th}$ order of the Taylor series of said delay time ($t_R$).

**3.** Time dispersion compensating device,
**characterized in that** it comprises a first device according to claim 2 and a second device according to claim 2, the second device being oriented at 180° relative to the first device.

**4.** Method for compressing laser pulses previously stretched by a dispersive optical device,
**characterized in that** it uses a device according to one of claims 1 to 3.

**5.** Method for compensating the time dispersion of an acousto-optic filter, which may or may not be programmable,
**characterized in that** it illustrates a device according to one of claims 1 to 3.

# Fig.1

# Fig.2

# Fig.3

# Fig.4

## Fig.5

Fréquence optique (THz)

## Fig.6

Fréquence optique (THz)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0958840

- WO 0958840 A

**Littérature non-brevet citée dans la description**

- **N.FORGET ; V.CROZATIER ; P.TOURNOIS.** Transmission Bragg-grating Grisms for Pulse Compression. *Applied Physics B,* 2012, vol. 109, 121-125
- **E.B. TREACY.** Optical Pulse Compression with Diffraction Gratings. *IEEE J. on Quantum Electron.,* Septembre 1969, vol. 5 (9), 454-458

- Efficient reflection grisms for pulse compression and dispersion compensation of femtosecond pulses. *Optics Letters,* Novembre 2006, 3363-3365
- Dispersion management for sub-10fs, 10TW optical parametric chirped-pulse amplifier. *Optics Letters,* Août 2007, 2227-2229
- Design considerations for a compact grism stretcher for non-collinear optical parametric chirped-pulse amplification. *Appl.Phys.B,* 2009, 445-452